# EUROPEAN PATENT SPECIFICATION

(11) **EP 3 490 109 B1**
(45) Date of publication and mention of the grant of the patent: **30.06.2021**
(21) Application number: 17203202.1
(22) Date of filing: 23.11.2017
(51) Int. Cl.: H02K 1/27, H02K 1/17, H02K 7/18

(54) **PERMANENT MAGNET SUPPORT OF A PERMANENT MAGNET GENERATOR**
PERMANENTMAGNETTRÄGER EINES PERMANENTMAGNETGENERATORS
SUPPORT D'AIMANT PERMANENT D'UN GÉNÉRATEUR À AIMANT PERMANENT

(43) Date of publication of application: 29.05.2019
(73) Proprietor: Siemens Gamesa Renewable Energy A/S, 7330 Brande (DK)
(72) Inventor: Azar, Ziad, Sheffield, S10 4ED (GB); Duke, Alexander, Sheffield, S6 5AG (GB)
(74) Representative: Aspacher, Karl-Georg

(56) References cited:
- EP-A1- 2 348 619
- EP-A1- 2 658 095
- EP-A1- 3 402 044
- EP-A2- 3 068 019
- WO-A1-2016/114054
- DE-A1-102010 040 400
- US-A1- 2007 090 708

## Description

### Field of invention

The present invention relates to the field of reducing eddy current losses in a permanent magnet generator. Particularly, the present invention relates to a permanent magnet support of a permanent magnet generator and a method of manufacturing a permanent magnet support of a permanent magnet generator. Such permanent magnet support and method of manufacturing may be particularly used in a wind turbine generator.

### Art Background

In the above specified technical field, in order to reduce eddy current losses, magnet segmentation of the permanent magnets is typically used. According to the practice of magnet segmentation, a magnet element is cut axially and/or circumferentially into small magnetic pieces which then are polished on all side surfaces. Afterwards, the small magnetic pieces are glued back together in one permanent magnet unit.

As an alternative or in addition to the segmentation as above described, partial cuts may be provided on the permanent magnets in order to disrupt the eddy current path, as shown in US 6359359.

In such prior art however, even though eddy currents also extend to the supports of the permanent magnets, the supports are not specifically designed for disrupting the eddy current paths.

In other prior art documents (WO 2016/114054, DE 10 2010 040400, EP 3 068 019, US 2007/090708, EP 2 658 095, EP 2 348 619, EP 3 402 044) the supports are also designed for disrupting the eddy current paths, however the design of the supports may be improved.

### Summary of the Invention

It is therefore an object of the present invention to provide an effective and cheap technique for reducing the overall losses in a permanent magnet generator by reducing the eddy current losses in the permanent magnet supports.

This objective may be solved by the permanent magnet support of a permanent magnet generator and the method of manufacturing the permanent magnet support according to the independent claims. Advantageous embodiments of the present invention are described by the dependent claims.

According to a first aspect of the present invention a permanent magnet support of a permanent magnet generator according to claim 1 is provided.

According to a second aspect of the present invention a permanent magnet generator including the above described permanent magnet support is provided.

According to a third aspect of the present invention a wind turbine including the above described permanent magnet generator is provided.

According to a fourth aspect of the present invention a method of manufacturing a permanent magnet support of a permanent magnet generator according to claim 10 is provided.

According to possible embodiments of the invention, the permanent magnet generator may be an electrical generator. Particularly, but not exclusively, the electrical generator may be used in a wind turbine.

Advantageously, the one or more slits of the present invention disrupt the eddy current paths in the permanent magnet support, thus reducing the eddy current losses and consequently the overall losses in the permanent magnet generator.

The slit may be easily and cost-effectively formed in the support by, for example, multi wire cutting, laser cutting, plasma cutting or autogenous gas cutting.

According to respective embodiments of the invention, the permanent magnet support comprises at least a second side which is an opposite side with respect to the first side, at least one first slit being formed in the permanent magnet support on one of the first side or the second side.

According to other respective embodiments of the invention, the permanent magnet support comprises a further third lateral side connecting the first side and the second side, at least one first slit being formed in the permanent magnet support on the third lateral side.

Particularly, the permanent magnet support may be a regular cuboid where the first side and the second side are two top and bottom sides, respectively to contact a permanent magnet of the permanent magnet generator and a back region of a stator or of a rotor. A plurality of lateral sides connects the top and bottom sides of the regular cuboid. In such a permanent magnet support at least one first slit is formed in any of the top, bottom or lateral sides. According to other embodiments the permanent magnet support may have an irregular shape, with a plurality of sides. In such a permanent magnet support at least one first slit is formed in any of the sides of the irregular permanent magnet support.

According to respective embodiments of the invention, at least one first slit is oriented axially, with respect to an axis of the permanent magnet generator.

According to further respective embodiments of the invention, the permanent magnet support comprises at least a first plurality of slits formed in the permanent magnet support on at least one of the first side and the second side.

According to further respective embodiments of the invention, at least two slits of the first plurality of slits may have different length or width or depth.

According to other respective embodiments of the invention, the permanent magnet support comprises at least a second plurality of slits formed in the permanent magnet support on at least one of the first side or the second side or the third side.

According to other respective embodiments of the invention, one first slit is formed in the permanent magnet support on one of the plurality of sides and at least a second slit is formed in the permanent magnet support on another of the plurality of sides.

Accordingly, for example, a first plurality of slits may be provided on one side of the permanent magnet support while a second plurality of slits may be provided on the opposite side or on a lateral side.

According to other respective embodiments of the invention, the permanent magnet support provided with the slits may comprise a base plate, a second side of the support being subject to be connected to a rotor or a stator of the permanent magnet generator.

Alternatively or in addition to the slits formed on the base plate, slits may be also formed on a back region of a rotor or of a stator of the permanent magnet generator, to which the base plate or directly the permanent magnet is coupled.

According to the embodiment of the present invention, at least one slit is formed inclined with respect to the side on which it is formed.

It has to be noted that embodiments of the invention have been described with reference to different subject-matters.

In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject-matter also any combination between features relating to different subject-matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention and embodiments not forming part of the invention will be described in more detail hereinafter with reference to examples of embodiment but to which the invention is not limited.
Fig. 1 shows a schematic section of a wind turbine including a permanent magnet generator with a permanent magnet support according to the present invention.
Fig. 2 shows a schematic cross-sectional view of a permanent magnet generator including a permanent magnet support according to the present invention.
Fig. 3 shows a schematic lateral view of a permanent magnet support according to an exemplary embodiments of the present invention, coupled to a permanent magnet.
Fig. 4 shows an axonometric view of a permanent magnet support not forming part of the present invention.
Fig. 5 shows an axonometric view of a permanent magnet support not forming part of the present invention.
Fig. 6 shows an axonometric view of a permanent magnet support not forming part of the present invention.
Fig. 7 shows an axonometric view of a permanent magnet support not forming part of the present invention.
Fig. 8 shows an axonometric view of a permanent magnet support not forming part of the present invention.
Fig. 9 shows an axonometric view of a permanent magnet support not forming part of the present invention.
Fig. 10 shows an axonometric view of a permanent magnet support not forming part of the present invention.
Fig. 11 shows an axonometric view of a permanent magnet support not forming part of the present invention.
Fig. 12 shows an axonometric view of a permanent magnet support not forming part of the present invention.
Fig. 13 shows an axonometric view of a permanent magnet support not forming part of the present invention.

### Detailed Description

The illustrations in the drawings are schematically. It is noted that in different figures, similar or identical elements are provided with the same reference signs.

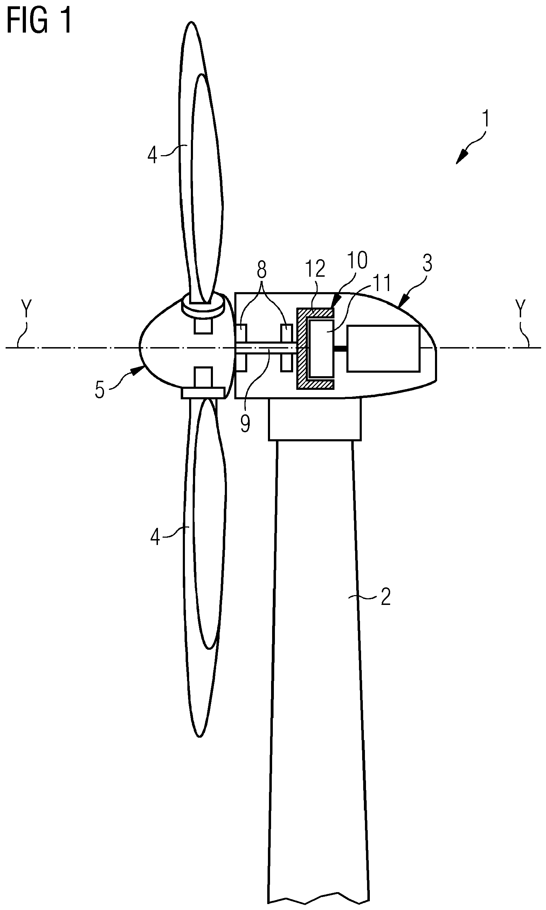

**Figure 1** shows a wind turbine 1 according to the invention. The wind turbine 1 comprises a tower 2, which is mounted on a non-depicted fundament. A nacelle 3 is arranged on top of the tower 2.

The wind turbine 1 further comprises a wind rotor 5 having three blades 4 (in the perspective of Figure 1 only two blades 4 are visible). The wind rotor 5 is rotatable around a rotational axis Y. When not differently specified, the terms axial, radial and circumferential in the following are made with reference to the rotational axis Y.

The blades 4 extend radially with respect to the rotational axis Y.

The wind turbine 1 comprises a permanent magnet generator 10. The wind rotor 5 is rotationally coupled with the permanent magnet generator 10 by means of a rotatable main shaft 9. A schematically depicted bearing assembly 8 is provided in order to hold in place the rotor 5. The rotatable main shaft 9 extends along the rotational axis Y. The permanent magnet generator 10 includes a stator 11 and a rotor 12. The rotor 12 is rotatable with respect to the stator 11 about the rotational axis Y.

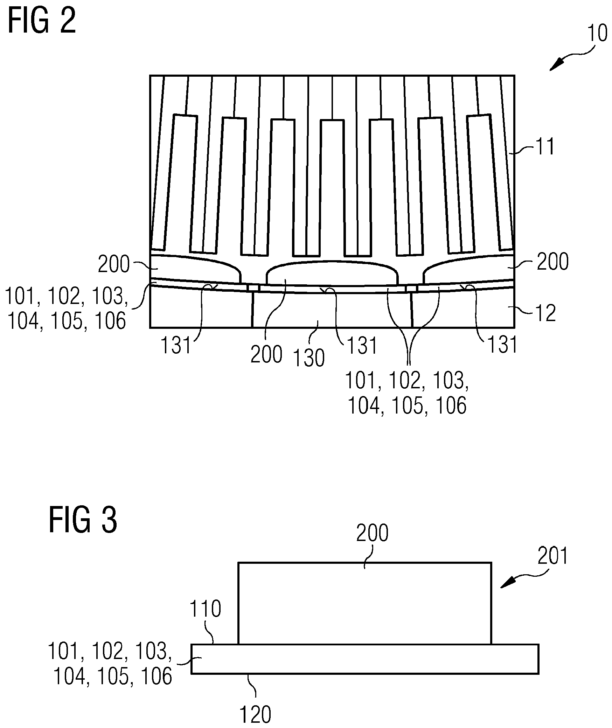

**Figure 2** shows a partial cross-sectional view of the permanent magnet generator 10 including a permanent magnet support according to the invention.

In the embodiment of Figures 1 and 2, the rotor 12 is radially external with respect the stator 11 and rotatable about the rotational axis Y.

According to other possible embodiments of the present invention (not represented in the attached figures), the rotor 12 is radially internal with respect the stator 11 and rotatable about the rotational axis Y.

In the embodiment of Figure 2, a plurality of permanent magnets 200 is attached to the rotor 12. The permanent magnets 200 are attached to a side of the rotor 12 which faces the stator 11.

According to other possible embodiments of the present invention (not represented in the attached figures), a plurality of permanent magnets 200 is attached to the stator 11.

In the embodiment of Figure 2, the rotor 12 comprises a permanent magnet support including a plurality of base plate 101, 102, 103, 104, 105, 106 and a rotor back region 130. Each of the permanent magnets 200 are attached to the rotor back region 130 by means of a respective base plate 101, 102, 103, 104, 105, 106.

**Figure 3** shows a permanent magnet module 201 including a permanent magnet 200 and a respective base plate 101, 102, 103, 104, 105, 106 attached thereto. Each base plate 101, 102, 103, 104, 105, 106 of each permanent magnet module 201 is connected to a respective recess 131 provided in the rotor back region 130.

According to other possible embodiments of the present invention (not represented in the attached figures), each permanent magnet module 201 is connected to the stator 11.

According to further possible embodiments of the present invention (not represented in the attached figures), the permanent magnets 200 are attached directly to the rotor 12 or the stator 11, in particular to the rotor back region 130, without using the base plate 101, 102, 103, 104, 105, 106.

In all the embodiments of the present invention, the permanent magnet support 101, 102, 103, 104, 105, 106, 130 comprises a plurality of sides, at least one first side of the plurality of sides being subject to contact a permanent magnet 200 of the permanent magnet generator 10 and at least one first slit formed in the permanent magnet support (on one of the plurality of sides.

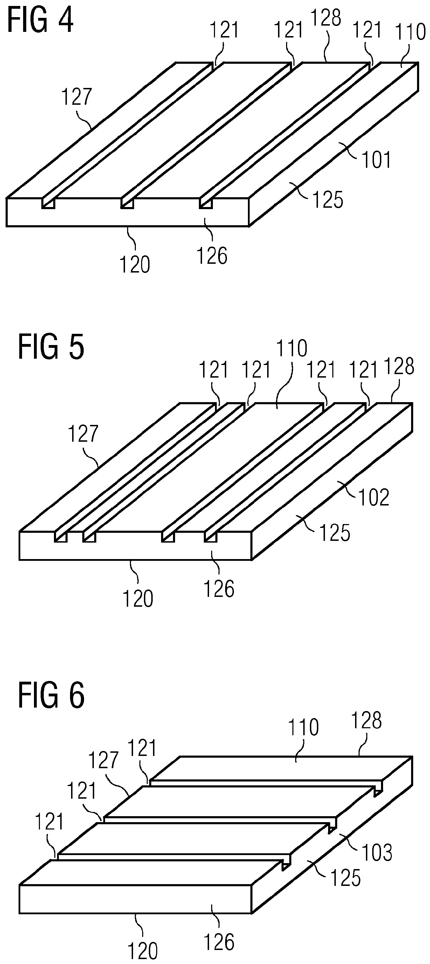

In the embodiments of the attached **Figures 4** to **13**, which do not form part of the present invention, the permanent magnet support 101, 102, 103, 104, 105, 106, 130 comprises a first side 110 subject to contact a permanent magnet 200, a second side 120 which is an opposite side with respect to the first side 110 and four lateral sides 125, 126, 127, 128 laterally connecting the first and the second sides 110, 120. The permanent magnet support 101, 102, 103, 104, 105, 106, 130 has the shape of a regular cuboid, where the first side 110 is a top side and the second side 120 is a bottom side. According to other embodiments (not shown), the permanent magnet support has a different shape, for example with a different number of lateral sides or with an irregular shape.

In the embodiments of the attached **Figures 4** to **13**, which do not form part of the present invention, at least one first slit 121 is formed in the permanent magnet support 101, 102, 103, 104, 105, 106, 130 on one of the first side 110 or the second side 120. According to other embodiments (not shown), at least one first slit 121 is formed in the permanent magnet support 101, 102, 103, 104, 105, 106, 130 on one of the lateral sides 125, 126, 127, 128.

**Figures 4** to **13** show embodiments which are not part of the present invention, where base plate 101, 102, 103, 104, 105, 106 comprises the first side 110, the second side 120 and one or more pluralities of slits 121, 122.

According to further possible embodiments of the present invention (not represented in the attached figures), the first side 110, the second side 120 and one or more pluralities of slits 121, 122 may be provided on the stator 11 or on the rotor 12, particularly on the rotor back region 130.

According to further possible embodiments of the present invention (not represented in the attached figures), slits 121, 122 may be provided on the base plate 101, 102, 103, 104, 105, 106 and on the stator 11 or on the rotor 12, particularly on the rotor back region 130.

In the embodiments of **Figures 4** to **13**, which do not form part of the present invention, the first side 110 is subject to be connected to a respective permanent magnet 200 while the second side 120 is subject to be connected to a respective recess 131 in the rotor back region 130.

**Figure 4**, which does not form part of the present invention, shows a first embodiment 101 of the base plate including a plurality of slits 121 formed in the base plate 101 on the first side 110. The plurality of slits 121 are parallel to each other, axially oriented and regularly distanced from one another.

According to a further possible embodiment of the present invention (not represented in the attached figures), the plurality of slits 121 of the base plate 101 are formed on the second side 120 or on both the first side 110 and the second side 120.

**Figure 5**, which does not form part of the present invention, shows a second embodiment 102 of the base plate including a plurality of slits 121 formed in the base plate 101 on the first side 110. The plurality of slits 121 are parallel to each other, axially oriented and not regularly distanced from one another.

**Figure 6**, which does not form part of the present invention, shows a third embodiment 103 of the base plate including a plurality of slits 121 formed in the base plate 101 on the first side 110. The plurality of slits 121 are parallel to each other, circumferentially oriented and regularly distanced from one another. According to a further possible embodiment of the present invention (not represented in the attached figures), the plurality of slits 121 of the base plate 103 are not regularly distanced from one another.

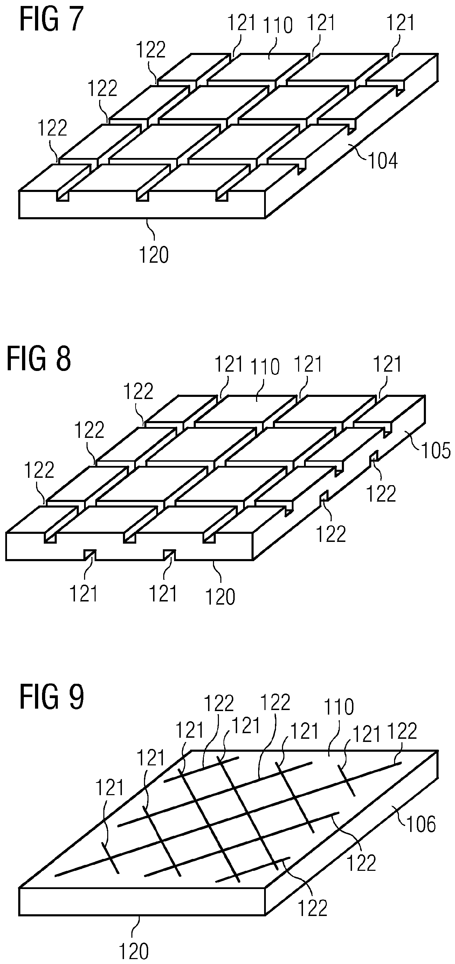

**Figure 7**, which does not form part of the present invention, shows a fourth embodiment 104 of the base plate including a first plurality of slits 121 and a second plurality of slits 122, both pluralities 121, 122 being formed in the base plate 104 on the first side 110. The slits 121 of the first plurality are parallel to each other and axially oriented. The slits 122 of the second plurality are parallel to each other and circumferentially oriented, i.e. the slits 122 of the second plurality are orthogonal to the slits 121 of the first plurality.

**Figure 8**, which does not form part of the present invention, shows a fifth embodiment 105 of the base plate including a first plurality of slits 121 and a second plurality of slits 122, both pluralities 121, 122 being formed in the base plate 104 on the first side 110 and on the second side 120. The slits 121 of the first plurality are parallel to each other, axially oriented and regularly distanced from one another in the circumferential direction. The slits 122 of the second plurality are parallel to each other, circumferentially oriented and regularly distanced from one another in the axial direction.

**Figure 9**, which does not form part of the present invention, shows a sixth embodiment 106 of the base plate including a first plurality of slits 121 and a second plurality of slits 122, both pluralities 121, 122 being formed in the base plate 106 on the first side 110 and on the second side 120. The slits 121 of the first plurality are inclined with respect to an axis of the permanent magnet generator 10 of a first angle comprised between 0° and 90°. The slits 122 of the second plurality are inclined with respect to an axis of the permanent magnet generator 10 of a second angle comprised between 0° and 90°, the second angle being different from the first angle. In particular the slits 121 of the first plurality may be orthogonal to the slits 122 of the second plurality.

According to a further possible embodiment of the present invention (not represented in the attached figures), at least one plurality of slits 121 are provided, which are inclined with respect to an axis of the permanent magnet generator 10 of a second angle comprised between 0° and 90°.

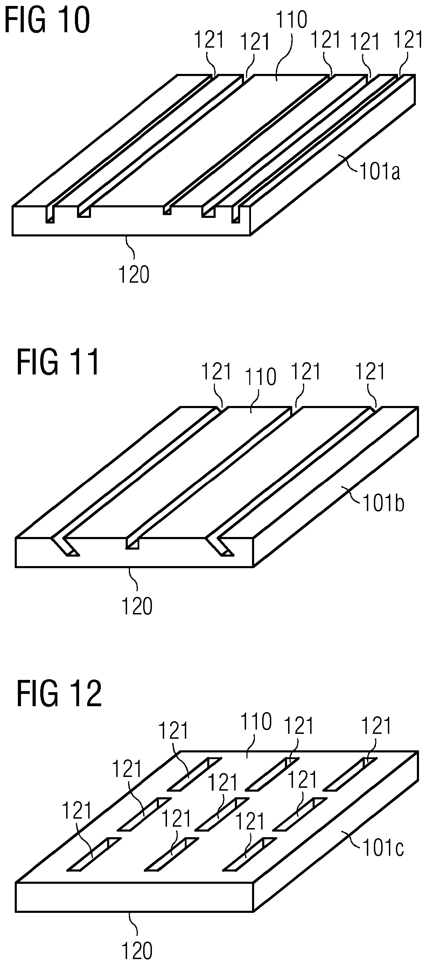

**Figure 10**, which does not form part of the present invention, shows a seventh embodiment 101a of the base plate including a plurality of slits 121 parallel to each other and axially oriented. The embodiment 101a differentiates from the first embodiment 101 in that the plurality of slits is not regularly distanced from one another and in that they have different depths and widths. Particularly, depths and widths may potentially be irregular across the base plate.

**Figure 11**, which does not form part of the present invention, shows an eighth embodiment 101b of the base plate including a plurality of slits 121 parallel to each other and axially oriented. The embodiment 101b differentiates from the first embodiment 101 in that two slits of the plurality of slits are inclined with respect to first side 110, on which they are provided. Particularly, according to the invention, each of the plurality of slits is performed at different respective angles of inclination with respect to the side on which they are provided.

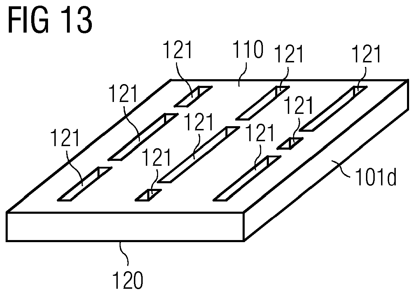

**Figures 12** and **13** respectively , which do not form part of the present invention, show a ninth embodiment 101c and a tenth embodiment 101d of the base plate including a plurality of slits 121 parallel to each other and axially oriented. The embodiments 101c, 101d differentiate themselves from first embodiment 101 in that the slits 121 are discontinuous in a dashed shape, which do not extend for the whole length or width of the base plate, i.e. from one lateral side 126 to the opposite lateral side 128.

More in general, according to possible embodiments of the present invention, the slits 121 do not have to extend for the whole length or width or height of the base plate.

A plurality of other embodiments may be provided, for example as combination of the above describe embodiments, of **Figures 4** to **13**, provided that at least one first slit 121 is formed in the permanent magnet support 101, 102, 103, 104, 105, 106, 130 on one of the first side 110 or the second side 120.

The permanent magnet support of the present invention may be conveniently manufactured by adding the slits 121, 122 through a manufacturing step of multi wire cutting or laser cutting or plasma cutting or autogenous gas cutting.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Permanent magnet support (101, 102, 103, 104, 105, 106, 130) of a permanent magnet generator (10), the permanent magnet support (101, 102, 103, 104, 105, 106, 130) comprising:
a plurality of sides (110, 120), at least one first side of the plurality of sides (110, 120, 125, 126, 127, 128) being subject to contact a permanent magnet (200) of the permanent magnet generator (10),
at least one first plurality of slits (121) formed in the permanent magnet support (101, 102, 103, 104, 105, 106, 130) on one of the plurality of sides (110, 120, 125, 126, 127, 128), the first plurality of slits (121) being parallel to each other and oriented axially with respect to an axis of the permanent magnet generator (10), the first plurality of slits (121) being inclined in their depth direction across the base plate with respect to the side, on which they are provided,
**characterized in that**
each of the plurality of slits (121) is performed at a different respective angle of inclination in its depth direction with respect to the side on which they are provided.

2. Permanent magnet support (101, 102) according to claim 1, comprising at least a second side (120) which is an opposite side with respect to the first side (110),
the at least one first plurality of slits (121) being formed in the permanent magnet support (101, 102, 103, 104, 105, 106, 130) on one of the first side (110) or the second side (120) .

3. Permanent magnet support (101, 102) according to claim 2, comprising at least a third lateral side (125, 126, 127, 128) connecting the first side (110) and the second side (120) ,
the at least one first plurality of slits (121) being formed in the permanent magnet support (101, 102, 103, 104, 105, 106, 130) on the third lateral side (125, 126, 127, 128).

4. Permanent magnet support (108) according to any of the previous claims, wherein at least two slits (121) of the first plurality of slits (121) have different length or width or depth.

5. Permanent magnet support (105) according to any one of the claims 1 to 4, wherein one first slit (121) is formed in the permanent magnet support (100) on one of the plurality of sides (110, 120, 125, 126, 127, 128) and at least a second slit (123) is formed in the permanent magnet support (100) on another of the plurality of sides (110, 120, 125, 126, 127, 128) .

6. Permanent magnet support (101, 102, 103, 104, 105, 106, 130) according to any one of the claims 1 to 5 wherein the magnet support (101, 102, 103, 104, 105, 106) comprises a base plate (101, 102, 103, 104, 105, 106), a second side (120) of the support (101, 102, 103, 104, 105, 106) being subject to be connected to a rotor (11) or a stator (12) of the permanent magnet generator (10), at least one first slit (121) being formed on the base plate (101, 102, 103, 104, 105, 106).

7. Permanent magnet support (101, 102, 103, 104, 105, 106) according to any one of the claims 1 to 6, wherein the magnet support (101, 102, 103, 104, 105, 106) includes a back region (130) of a stator (11) or of a rotor (12) of the permanent magnet generator (10), with at least one first slit (121) being formed on the back region (130).

8. A permanent magnet generator (10) including a permanent magnet support (101, 102, 103, 104, 105, 106) according to any one of the claims 1 to 7.

9. A wind turbine (1) including a permanent magnet generator (10) according to claim 8.

10. Method of manufacturing a permanent magnet support (101, 102, 103, 104, 105, 106) according to any of claims 1 to 7 of a permanent magnet generator (10), comprising:
providing a permanent magnet support (101, 102, 103, 104, 105, 106) having a plurality of sides (110, 120), at least one first side of the plurality of sides (110, 120, 125, 126, 127, 128) being subject to contact a permanent magnet (200) of the permanent magnet generator (10),
forming at least one first plurality of slits (121) in the permanent magnet support (101, 102, 103, 104, 105, 106, 130) on one of the plurality of sides (110, 120, 125, 126, 127, 128), the first plurality of slits (121) being parallel to each other and oriented axially with respect to an axis of the permanent magnet generator (10), the first plurality of slits (121) being inclined in their depth direction across the base plate with respect to the side, on which they are provided,
**characterized in that**
each of the plurality of slits (121) is performed at a different respective angle of inclination in its depth direction with respect to the side on which they are provided.

11. Method of manufacturing according to claim 10, wherein the at least one first plurality of slits (121) is formed by multi wire cutting or laser cutting or plasma cutting or autogenous gas cutting.

## Patentansprüche

1. Permanentmagnetträger (101, 102, 103, 104, 105, 106, 130) eines Permanentmagnetgenerators (10), wobei der Permanentmagnetträger (101, 102, 103, 104, 105, 106, 130) Folgendes umfasst:
eine Mehrzahl von Seiten (110, 120), wobei mindestens eine erste Seite der Mehrzahl von Seiten (110, 120, 125, 126, 127, 128) mit einem Permanentmagneten (200) des Permanentgenerators (10) in Berührung kommen kann,
mindestens eine erste Mehrzahl von Schlitzen (121), die in dem Permanentmagnetträger (101, 102, 103, 104, 105, 106, 130) auf einer der Mehrzahl von Seiten (110, 120, 125, 126, 127, 128) gebildet ist, wobei die erste Mehrzahl von Schlitzen (121) zueinander parallel und in Bezug auf eine Achse des Permanentmagnetgenerators (10) axial orientiert ist, wobei die erste Mehrzahl von Schlitzen (121) in Bezug auf die Seite, auf der sie vorgesehen ist, in ihrer Tiefenrichtung über die Grundplatte geneigt ist,
**dadurch gekennzeichnet, dass**
jeder der Mehrzahl von Schlitzen (121) in Bezug auf die Seite, auf der sie vorgesehen sind, in seiner Tiefenrichtung in einem anderen jeweiligen Neigungswinkel ausgeführt ist.

2. Permanentmagnetträger (101, 102) nach Anspruch 1, umfassend mindestens eine zweite Seite (120), die in Bezug auf die erste Seite (110) eine gegenüberliegende Seite ist,
wobei die mindestens eine der Mehrzahl von Schlitzen (121) in dem Permanentmagnetträger (101, 102, 103, 104, 105, 106, 130) auf einer der ersten Seite (110) oder der zweiten Seite (120) gebildet ist.

3. Permanentmagnetträger (101, 102) nach Anspruch 2, umfassend mindestens eine dritte seitliche Seite (125, 126, 127, 128), die die erste Seite (110) und die zweite Seite (120) verbindet,
wobei mindestens eine Mehrzahl von Schlitzen (121) in dem Permanentmagnetträger (101, 102, 103, 104, 105, 106, 130) auf der dritten seitlichen Seite (125, 126, 127, 128) gebildet ist.

4. Permanentmagnetträger (108) nach einem der vorhergehenden Ansprüche, wobei mindestens zwei Schlitze (121) der ersten Mehrzahl von Schlitzen (121) eine andere Länge oder Breite oder Tiefe aufweisen.

5. Permanentmagnetträger (105) nach einem der Ansprüche 1 bis 4, wobei ein erster Schlitz (121) in dem Permanentmagnetträger (100) auf einer der Mehrzahl von Seiten (110, 120, 125, 126, 127, 128) und mindestens ein zweiter Schlitz (123) in dem Permanentmagnetträger (100) auf einer anderen der Mehrzahl von Seiten (110, 120, 125, 126, 127, 128) gebildet sind.

6. Permanentmagnetträger (101, 102, 103, 104, 105, 106, 130) nach einem der Ansprüche 1 bis 5, wobei der Magnetträger (101, 102, 103, 104, 105, 106) eine Grundplatte (101, 102, 103, 104, 105, 106) umfasst, wobei eine zweite Seite des Trägers (101, 102, 103, 104, 105, 106) des Trägers (101, 102, 103, 104, 105, 106) mit einem Rotor (11) oder einem Stator (12) des Permanentmagnetgenerators (10) verbunden werden kann, wobei mindestens ein erster Schlitz (121) auf der Grundplatte (101, 102, 103, 104, 105, 106) gebildet ist.

7. Permanentmagnetträger (101, 102, 103, 104, 105, 106) nach einem der Ansprüche 1 bis 6, wobei der Magnetträger (101, 102, 103, 104, 105, 106) einen rückseitigen Bereich (130) eines Stators (11) oder eines Rotors (12) des
Permanentmagnetgenerators (10) einschließt, mit mindestens einem ersten Schlitz (121), der auf dem rückseitigen Bereich (130) gebildet ist.

8. Permanentmagnetgenerator (10), der einen Permanentmagnetträger (101, 102, 103, 104, 105, 106) nach einem der Ansprüche 1 bis 7 einschließt.

9. Windkraftanlage (1), die einen Permanentmagnetgenerator (10) nach Anspruch 8 einschließt.

10. Verfahren zur Herstellung eines Permanentmagnetträgers (101, 102, 103, 104, 105, 106) nach einem der Ansprüche 1 bis 7 eines Permanentmagnetgenerators (10), das Folgendes umfasst:
Bereitstellen eines Permanentmagnetträgers (101, 102, 103, 104, 105, 106), der eine Mehrzahl von Seiten (110, 120) aufweist, wobei mindestens eine erste Seite der Mehrzahl von Seiten (110, 120, 125, 126, 127, 128) mit einem Permanentmagneten (200) des Permanentgenerators (10) in Berührung kommen kann,
Bilden mindestens einer ersten Mehrzahl von Schlitzen (121) in dem Permanentmagnetträger (101, 102, 103, 104, 105, 106, 130) auf einer der Mehrzahl von Seiten (110, 120, 125, 126, 127, 128) gebildet ist, wobei die erste Mehrzahl von Schlitzen (121) zueinander parallel und in Bezug auf eine Achse des Permanentmagnetgenerators (10) axial orientiert ist, wobei die erste Mehrzahl von Schlitzen (121) in Bezug auf die Seite, auf der sie vorgesehen ist, in ihrer Tiefenrichtung über die Grundplatte geneigt ist,
**dadurch gekennzeichnet, dass**
jeder der Mehrzahl von Schlitzen (121) in Bezug auf die Seite, auf der sie vorgesehen sind, in seiner Tiefenrichtung in einem anderen jeweiligen Neigungswinkel ausgeführt ist.

11. Verfahren zur Herstellung nach Anspruch 10, wobei die mindestens erste Mehrzahl von Schlitzen (121) durch Mehrdrahtschneiden oder Laserschneiden oder autogenes Brennschneiden gebildet wird.

## Revendications

1. Support d'aimant permanent (101, 102, 103, 104, 105, 106, 130) d'un générateur à aimant permanent (10), le support d'aimant permanent (101, 102, 103, 104, 105, 106, 130) comprenant :
une pluralité de côtés (110, 120), au moins un premier côté de la pluralité de côtés (110, 120, 125, 126, 127, 128) étant susceptible d'entrer en contact avec un aimant permanent (200) du générateur à aimant permanent (10),
au moins une première pluralité de fentes (121) formées dans le support d'aimant permanent (101, 102, 103, 104, 105, 106, 130) sur l'un de la pluralité de côtés (110, 120, 125, 126, 127, 128), la première pluralité de fentes (121) étant parallèles entre elles et orientées axialement par rapport à un axe du générateur à aimant permanent (10), la première pluralité de fentes (121) étant inclinées dans leur direction de profondeur à travers la plaque de base par rapport au côté sur lequel elles sont prévues,
**caractérisé en ce que**
chacune de la pluralité de fentes (121) est réalisée à un angle d'inclinaison respectif différent dans sa direction de profondeur par rapport au côté sur lequel elles sont prévues.

2. Support d'aimant permanent (101, 102) selon la revendication 1, comprenant au moins un deuxième côté (120) qui est un côté opposé par rapport au premier côté (110), l'au moins une première pluralité de fentes (121) étant formées dans le support d'aimant permanent (101, 102, 103, 104, 105, 106, 130) sur l'un du premier côté (110) ou du deuxième côté (120) .

3. Support d'aimant permanent (101, 102) selon la revendication 2, comprenant au moins un troisième côté latéral (125, 126, 127, 128) reliant le premier côté (110) et le deuxième côté (120),
l'au moins une première pluralité de fentes (121) étant formées dans le support d'aimant permanent (101, 102, 103, 104, 105, 106, 130) sur le troisième côté latéral (125, 126, 127, 128).

4. Support d'aimant permanent (108) selon l'une quelconque des revendications précédentes, dans lequel au moins deux fentes (121) de la première pluralité de fentes (121) ont des longueurs ou des largeurs ou des profondeurs différentes.

5. Support d'aimant permanent (105) selon l'une quelconque des revendications 1 à 4, dans lequel une première fente (121) est formée dans le support d'aimant permanent (100) sur l'un de la pluralité de côtés (110, 120, 125, 126, 127, 128) et au moins une deuxième fente (123) est formée dans le support d'aimant permanent (100) sur un autre côté de la pluralité de côtés (110, 120, 125, 126, 127, 128).

6. Support d'aimant permanent (101, 102, 103, 104, 105, 106, 130) selon l'une quelconque des revendications 1 à 5, dans lequel le support d'aimant (101, 102, 103, 104, 105, 106) comprend une plaque de base (101, 102, 103, 104, 105, 106), un deuxième côté (120) du support (101, 102, 103, 104, 105, 106) étant susceptible d'être relié à un rotor (11) ou à un stator (12) du générateur à aimant permanent (10), au moins une première fente (121) étant formée sur la plaque de base (101, 102, 103, 104, 105, 106).

7. Support d'aimant permanent (101, 102, 103, 104, 105, 106) selon l'une quelconque des revendications 1 à 6, dans lequel le support d'aimant (101, 102, 103, 104, 105, 106) comporte une région arrière (130) d'un stator (11) ou d'un rotor (12) du générateur à aimant permanent (10), au moins une première fente (121) étant formée sur la région arrière (130).

8. Générateur à aimant permanent (10) comportant un support d'aimant permanent (101, 102, 103, 104, 105, 106) selon l'une quelconque des revendications 1 à 7.

9. Éolienne (1) comportant un générateur à aimant permanent (10) selon la revendication 8.

10. Procédé de fabrication d'un support d'aimant permanent (101, 102, 103, 104, 105, 106) selon l'une quelconque des revendications 1 à 7 d'un générateur à aimant permanent (10), comprenant :
fournir un support d'aimant permanent (101, 102, 103, 104, 105, 106) ayant une pluralité de côtés (110, 120), au moins un premier côté de la pluralité de côtés (110, 120, 125, 126, 127, 128) étant susceptible d'entrer en contact avec un aimant permanent (200) du générateur à aimant permanent (10),
former au moins une première pluralité de fentes (121) dans le support d'aimant permanent (101, 102, 103, 104, 105, 106, 130) sur l'un de la pluralité de côtés (110, 120, 125, 126, 127, 128), la première pluralité de fentes (121) étant parallèles entre elles et orientées axialement par rapport à un axe du générateur à aimant permanent (10), la première pluralité de fentes (121) étant inclinées dans leur direction de profondeur à travers la plaque de base par rapport au côté sur lequel elles sont prévues,
**caractérisé en ce que**
chacune de la pluralité de fentes (121) est réalisée à un angle d'inclinaison respectif différent dans sa direction de profondeur par rapport au côté sur lequel elles sont prévues.

11. Procédé de fabrication selon la revendication 10, dans lequel l'au moins une première pluralité de fentes (121) sont formées par découpe multifilaire ou découpe au laser ou découpe au plasma ou découpe autogène au gaz.
